(19) **Europäisches Patentamt**

**European Patent Office**

**Office européen des brevets**

(11) **EP 1 015 770 B1**

(12) **FASCICULE DE BREVET EUROPEEN**

(45) Date de publication et mention
de la délivrance du brevet:
**11.12.2002 Bulletin 2002/50**

(21) Numéro de dépôt: **98943955.9**

(22) Date de dépôt: **10.09.1998**

(51) Int Cl.⁷: **F04D 13/06**
// (H02K5/128, F04D29:04)

(86) Numéro de dépôt international:
**PCT/FR98/01935**

(87) Numéro de publication internationale:
**WO 99/014503 (25.03.1999 Gazette 1999/12)**

(54) **POMPE ROTATIVE A ROTOR IMMERGE**

ROTATIONSPUMPE MIT TAUCHROTOR

ROTARY PUMP WITH IMMERSED ROTOR

(84) Etats contractants désignés:
**DE FR GB IT NL SE**

(30) Priorité: **12.09.1997 FR 9711363**

(43) Date de publication de la demande:
**05.07.2000 Bulletin 2000/27**

(73) Titulaire: **SOCIETE DE MECANIQUE MAGNETIQUE**
**F-27950 Saint-Marcel (FR)**

(72) Inventeurs:
• **BRUNET, Maurice**
**F-27950 Sainte Colombe près Vernon (FR)**
• **HELENE, Eric**
**F-76350 Oissel (FR)**

(74) Mandataire: **Thévenet, Jean-Bruno et al**
**Cabinet Beau de Loménie**
**158, rue de l'Université**
**75340 Paris Cédex 07 (FR)**

(56) Documents cités:
**EP-A- 0 346 730**          **EP-A- 0 612 135**
**WO-A-96/31937**          **CH-A- 305 818**
**FR-A- 2 716 700**

• **ALLAIRE P E ET AL: "DESIGN, CONSTRUCTION AND TEST OF MAGNETIC BEARINGS IN AN INDUSTRIALCANNED MOTOR PUMP" WORLD PUMPS, no. 9, 1 septembre 1989, pages 312-319, XP000103734**

## Description

La présente invention concerne une pompe rotative à rotor immergé, notamment utilisée pour aspirer puis refouler des liquides, tels que des hydrocarbures, issus de processus chimiques.

Les pompes rotatives à rotor immergé connues dans la technique antérieure comprennent généralement une roue de pompe entraînée en rotation par un moteur électrique. Le moteur électrique est composé d'un élément statorique, ou stator, monté sur un bâti et d'un élément rotorique, ou rotor, en prise directe avec la roue de pompe. Une partie du liquide aspiré par la pompe est prélevée pour servir de liquide de refroidissement dans lequel est immergé le rotor. Le stator du moteur est protégé de ce liquide de refroidissement par une paroi étanche.

Un exemple de pompe rotative à rotor immergé est décrit dans le document CH 305 818A, qui montre en outre une rainure hélicoïdale formée à la surface du rotor, lui-même solidaire d'un arbre monté sur la boîte à l'aide de roulements à billes.

Le liquide de refroidissement s'écoulant sur la paroi externe du rotor constitue une masse qui s'oppose à la rotation du rotor mais surtout qui crée, à cause du faible entrefer du moteur (environ 1 mm) un accroissement considérable de l'inertie radiale du rotor quelle que soit sa vitesse. Cet apport d'inertie proportionnel à $\frac{R}{\varepsilon}$ (où R représente le rayon du rotor, et $\varepsilon$ l'entrefer) est très préjudiciable à un contrôle stable et robuste de moyens de support et de guidage du rotor tels que des paliers magnétiques.

La présente invention vise à remédier aux inconvénients précités, et notamment à permettre d'améliorer la stabilité et la qualité du contrôle des moyens de support et de guidage du rotor d'une pompe rotative à rotor immergé.

A cette fin, la présente invention propose d'ajouter des gorges de recirculation de liquide de manière à augmenter virtuellement l'entrefer global et de réduire ainsi le phénomène précité d'inertie radiale du rotor.

Si par exemple l'entrefer fait 200 mm de long et 1 mm d'épaisseur, quatre gorges de 10 mm de longueur (soit au total 40 mm) et 10 mm de profondeur pourront réduire le phénomène précité dans un rapport de un à deux ( $\frac{40}{200}$ x $\frac{10}{1}$ = 2).

De façon plus particulière, l'invention concerne une pompe rotative pour aspirer un liquide, comprenant une roue de pompe solidaire d'un rotor immergé dans une partie dudit liquide aspiré par la pompe, un moteur comprenant un élément statorique monté dans un bâti et un élément rotorique monté sur le rotor pour entraîner en rotation le rotor autour d'un axe, des moyens de support et de guidage du rotor, et un moyen de protection pour protéger l'élément statorique du moteur contre ledit liquide, le rotor comprenant au moins une gorge ménagée sur une surface externe recouverte par ladite partie de liquide, caractérisée en ce que les moyens de support et de guidage du rotor comprennent des premier et deuxième paliers magnétiques actifs radiaux disposés de part et d'autre du moteur, en ce que des gorges de recirculation de liquide sont ménagées sur la surface externe du rotor dans des zones situées entre le moteur et chacun des premier et deuxième paliers magnétiques radiaux et en ce que chaque gorge de recirculation de liquide est ménagée suivant un pourtour du rotor situé dans un plan sensiblement perpendiculaire à l'axe de rotation, pour en particulier réduire les effets d'inertie dus à ladite partie de liquide lors de déplacements radiaux du rotor.

Les moyens de support et de guidage le plus souvent utilisés dans les pompes rotatives de la technique antérieure comportent des paliers mécaniques lisses, qui sont lubrifiés par le liquide prélevé par la pompe. Ces paliers peuvent être fréquemment sollicités de manière anormale, en particulier en cas d'évaporation du liquide ou en cas de cavitation dans la pompe. Ils doivent donc être changés périodiquement, ce qui engendre un coût important et oblige l'utilisateur à ouvrir la pompe.

Selon la présente invention, le support et le guidage du rotor sont assurés par des paliers magnétiques, qui ne nécessitent pas de maintenance particulière.

Dans une première réalisation de l'invention, les moyens de support et de guidage comprennent au moins un palier magnétique actif radial de type cylindrique pour asservir la position radiale du rotor sur une position radiale d'équilibre, et des paliers magnétiques actifs axiaux pour asservir la position axiale du rotor sur une position axiale d'équilibre. Le palier magnétique actif radial est de préférence autodétecteur, c'est-à-dire est apte à détecter lui-même la position radiale du rotor. Pour l'asservissement axial de la position du rotor, un détecteur de position axiale est en revanche prévu à une extrémité du rotor. Les paliers magnétiques actifs axiaux asservissent alors la position axiale du rotor en fonction d'informations de position produites par le détecteur.

Dans une seconde réalisation de l'invention, les moyens de support et de guidage comprennent des paliers magnétiques actifs de type conique pour asservir les positions radiale et axiale du rotor sur des positions d'équilibre respectives. Chacun des paliers magnétiques actifs coniques est apte à détecter la position radiale du rotor. La position axiale du rotor est détectée par un détecteur de position axiale monté à une extrémité du rotor.

Dans les deux réalisations ci-dessus, l'utilisation de paliers magnétiques autodétecteurs permet de réduire les coûts de fabrication de la pompe par rapport à l'emploi de détecteurs de position radiale distincts des paliers radiaux.

Les paliers magnétiques radiaux cylindriques ou coniques précités peuvent être homopolaires ou hétéropolaires.

Typiquement, le moyen de protection est une chemise empêchant ladite partie de liquide recouvrant le rotor de pénétrer dans une cavité du bâti dans laquelle est monté l'élément statorique du moteur. Ladite cavité du bâti peut être remplie d'un produit injecté sous pression (élastomère, résine epoxy, sable) pour renforcer la protection de l'élément statorique du moteur vis-à-vis de la partie de liquide recouvrant le rotor.

Un alésage peut être pratiqué dans le rotor le long de l'axe de rotation pour évacuer ladite partie de liquide recouvrant le rotor vers la roue de pompe depuis une extrémité du rotor opposée à la roue de pompe. L'alésage permet de minimiser la circulation de liquide sur la surface externe du rotor, et ainsi de limiter la charge axiale appliquée aux paliers et au moteur.

Etant donné que la pompe se trouve le plus souvent en zone hasardeuse, des moyens doivent être prévus pour empêcher toute déflagration au niveau des connexions électriques. Selon l'invention, un compartiment antidéflagrant et étanche est intégré au bâti pour loger des circuits électroniques d'alimentation et de commande des moyens de guidage, c'est-à-dire des paliers magnétiques. Une première boîte de jonction antidéflagrante fixée au bâti permet de relier électriquement ces circuits électroniques au réseau électrique. Egalement, une seconde boîte de jonction antidéflagrante fixée au bâti permet de relier électriquement le moteur au réseau électrique.

D'autres caractéristiques et avantages de la présente invention ressortiront de la description suivante de modes particuliers de réalisation, donnés à titre d'exemples en référence aux dessins annexés, dans lesquels :

- la figure 1 est un schéma de principe d'une pompe rotative selon une première réalisation de l'invention ;
- la figure 2 est une vue en demi-coupe schématique d'un palier magnétique radial homopolaire prise suivant la ligne II-II de la figure 1 ;
- la figure 3 montre, également en demi-coupe radiale, un exemple de palier magnétique radial hétéropolaire pouvant être substitué au palier magnétique radial de la figure 2 ;
- la figure 4 est un schéma de principe d'une pompe rotative selon une seconde réalisation de l'invention, et
- les figures 5 et 6 sont des vues en demi-coupe radiale analogues à celles des figures 2 et 3 mais montrent la mise en oeuvre de détecteurs de position incorporés dans le stator du palier magnétique radial.

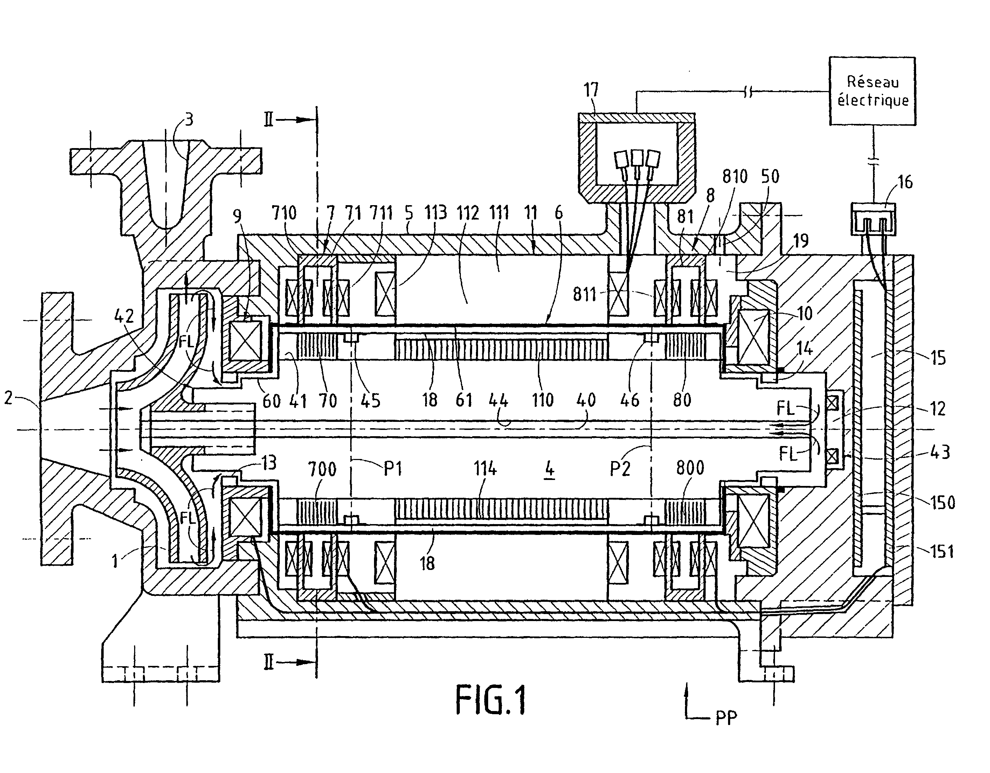

En référence à la figure 1, une pompe PP selon une première réalisation de l'invention comprend une roue de pompe 1 pour aspirer du liquide, tel qu'un produit chimique ou un hydrocarbure, à travers un orifice d'entrée 2 et refouler ce liquide vers un orifice de sortie 3, La roue de pompe 1 est solidaire d'un rotor 4 qui est entraîné en rotation autour d'un axe longitudinal 40 par rapport à un bâti fixe 5. Le rotor 4 est suspendu sans contact dans une enceinte sensiblement cylindrique 6 à l'intérieur du bâti 5 par des paliers magnétiques radiaux 7, 8 et des paliers magnétiques axiaux 9, 10, et est entraîné par un moteur électrique asynchrone 11.

Le moteur 11 comprend un élément rotorique 110 se présentant sous la forme d'un induit solidaire du rotor 4 et disposé sur une surface périphérique externe 41 de celui-ci dans l'enceinte 6, et un élément statorique 111, monté sur le bâti 5 à l'extérieur de l'enceinte 6 et en regard de l'induit 110. L'élément statorique 111 comporte un noyau 112, formé d'un empilement de tôles ferromagnétiques, et un bobinage 113 associé au noyau 112. Les tôles ferromagnétiques formant le noyau 112 sont typiquement conçues en un alliage fer-silicium du type non orienté, et ont une épaisseur comprise entre 0,3 et 0,5 mm. L'induit 110 peut être du type cage d'écureuil ou être réalisé en cage en surface d'entrefer en un matériau tel que le cuivre ou l'aluminium associé à un noyau ferromagnétique pouvant lui-même être feuilleté ou non.

Les paliers magnétiques radiaux 7, 8 sont identiques et disposés de part et d'autre du moteur 11. Ils comprennent chacun une armature annulaire 70, 80 en matériau ferromagnétique montée sur la surface externe 41 du rotor 4 dans l'enceinte 6, et des électro-aimants 71, 81 fixés au bâti 5 à l'extérieur de l'enceinte 6 et en regard de l'armature 70, 80. Les électro-aimants 71, 81 sont composés de culasses en forme de U 710, 810 supportant des bobinages 711, 811. Les paliers magnétiques radiaux 7, 8 sont avantageusement des paliers à autodétection de position, par exemple du type de ceux décrits dans le brevet FR-B-2716700 de la demanderesse. Ces paliers sont capables de détecter la position radiale du rotor 4 par rapport à l'axe 40 et d'asservir cette position sur une position radiale d'équilibre stable. L'utilisation de tels paliers à autodétection de position permet de réduire le coût de fabrication de la pompe PP en évitant l'emploi de détecteurs de position distincts des paliers.

Les paliers magnétiques axiaux 9 et 10, dits également "butées axiales", sont disposés à l'extérieur de l'enceinte 6 respectivement à proximité d'une première extrémité 42 du rotor 4 proche de la roue de pompe 1 et d'une seconde extrémité 43 du rotor 4 opposée à la première extrémité 42 et à la roue 1. Un détecteur de position axiale 12, de type conventionnel, est en outre monté sur la seconde extrémité 43 du rotor 4, et relié aux paliers axiaux 9 et 10 via le système de commande électronique pour assurer le contrôle de position axiale du rotor 4. Les paliers axiaux 9, 10 asservissent la position axiale du rotor 4 sur une position axiale d'équilibre stable en fonction des informations fournies par le détecteur 12.

Des paliers de secours mécaniques avantageusement en céramique 13, 14 sont prévus à proximité respectivement des deux extrémités 42 et 43 du rotor 4. Ces paliers sont utilisés pour guider et supporter le rotor 4 dans l'enceinte 6 en cas de défaillance des paliers magnétiques radiaux 7, 8 et/ou axiaux 9, 10. L'utilisation des paliers 13, 14 est donc peu fréquente et une éventuelle dégradation de leur état ne nécessite aucune intervention de maintenance pendant la durée de vie de la pompe PP.

L'alimentation et la commande électriques des paliers magnétiques 7 à 10 sont assurées par des cartes électroniques 150, 151 situées dans un compartiment antidéflagrant et étanche 15 intégré au bâti 5 à l'extrémité de ce dernier qui est opposée à la roue de pompe 1, c'est-à-dire du côté de la seconde extrémité 43 du rotor 4. Les cartes électroniques 150, 151 sont des cartes de type habituellement utilisés pour l'alimentation et l'asservissement des paliers magnétiques actifs. Une première carte 150 comprend des circuits électroniques de puissance pour alimenter les bobinages 711 et 811 des paliers radiaux 7, 8 et les paliers axiaux 9, 10. Une seconde carte 151 contient des circuits d'asservissement pour commander le positionnement radial du rotor 4 par les paliers radiaux à autodétection de position 7, 8 et le positionnement axial du rotor 4 par les paliers axiaux 9, 10 en fonction des informations fournies par le détecteur de position axiale 12. Les cartes électroniques 150, 151 sont reliées à une première boîte de jonction antidéflagrante 16, de type EEX, fixée sur le bâti 5 et elle-même reliée au réseau électrique monophasé.

Le bobinage 113 du moteur 11 est relié électriquement à une seconde boîte de jonction antidéflagrante 17, également de type EEX, fixée au bâti 5 et elle-même reliée au réseau électrique triphasé.

L'intégration des circuits électroniques de commande des paliers magnétiques actifs dans la pompe elle-même permet d'éviter l'utilisation de câbles longs et chers pour relier la pompe à l'armoire de contrôle qui devrait autrement se situer dans une zone où n'existe aucun risque de déflagration.

Comme montré sur la figure 1, l'ensemble constitué par le rotor 4, l'induit de moteur 110 et les armatures de palier magnétique 70, 80 présente une forme sensiblement cylindrique. Un espace libre 18 est défini entre cet ensemble et une paroi 60 de l'enceinte 6. L'écartement minimal entre l'ensemble 4-110-70-80 et la paroi 60 de l'enceinte 6 est typiquement de 1 mm. La paroi 60 de l'enceinte 6 est dans sa plus grande partie constituée par une chemise 61 (montrée en trait gras sur la figure 1) qui s'étend parallèlement à l'axe 40 sensiblement entre les première et seconde extrémités 42 et 43 du rotor 4 et traverse notamment les entrefers respectifs des paliers magnétiques radiaux 7 et 8 et du moteur 11. La chemise 61, d'épaisseur comprise entre 0,3 et 0,5 mm, est conçue en un matériau métallique, tel qu'un acier inoxydable, un alliage de la famille des Hastelloy, ou le titane, ou en un matériau composite, et est par ailleurs traitée contre la corrosion. La chemise 61 peut être magnétique dans les zones correspondant aux paliers radiaux 7, 8 et au moteur 11 ou seulement dans les zones correspondant aux paliers 7, 8. La chemise 61 sert de paroi de protection séparant le rotor 4, l'induit 110 et les armatures annulaires 70, 80, d'une cavité 19 du bâti 5 dans laquelle sont montés l'élément statorique 111 du moteur 11 et les éléments statoriques 71, 81 des paliers magnétiques radiaux 7, 8. De préférence, les éléments statoriques 111, 71 et 81 précités viennent en contact avec la chemise 61 et sont par exemple soudés à celle-ci.

En fonctionnement, le liquide aspiré par la roue de pompe 1 à travers l'orifice d'entrée 2 est, comme déjà précisé, refoulé vers l'orifice de sortie 3 de la pompe PP. Cependant, une partie du liquide aspiré pénètre, depuis le pourtour de la roue 1, dans l'espace libre 18 à l'intérieur de l'enceinte 6 en suivant les chemins indiqués par les flèches FL à la figure 1, pour servir de liquide de refroidissement. Ce liquide s'écoule dans l'espace libre 18 depuis la première extrémité 42 vers la seconde extrémité 43 du rotor 4 sur des parties de la surface externe 41 du rotor 4 non recouvertes par les éléments rotoriques 110, 70 et 80, et sur des surfaces externes respectives 114, 700 et 800 des éléments rotoriques précités. Lorsqu'il atteint la seconde extrémité 43 du rotor 4, le liquide est évacué vers la première extrémité 42 et la roue de pompe 1 à travers un alésage 44 pratiqué au centre du rotor 4 le long de l'axe 40.

Le rotor 4 et les éléments rotoriques 110, 70 et 80 sont ainsi complètement immergés dans le liquide de travail, c'est-à-dire le liquide aspiré par la pompe PP. Afin de protéger les éléments rotoriques 110, 70 et 80 contre le liquide de travail qui peut être corrosif, ces derniers sont revêtus respectivement de couches de protection métalliques ou céramiques constituant les surfaces externes 114, 700 et 800. La cavité 19 du bâti 5 est protégée du liquide de travail par la chemise 61. Par ailleurs, la cavité 19 est remplie d'un produit injecté sous pression (élastomère, résine, sable,...) qui peut être introduit par l'intermédiaire d'un orifice approprié 50 pratiqué à travers une face extérieure du bâti 5 et débouchant dans la cavité 19. Ce remplissage haute pression renforce la protection des éléments statoriques 71, 81 et 111 des paliers magnétiques radiaux 7, 8 et du moteur 11 contre le liquide de travail circulant dans l'espace libre 18.

Le liquide de travail dans l'espace libre 18 constitue une masse qui s'oppose au déplacement du rotor 4. En outre, en raison du faible écartement entre l'ensemble rotor 4-éléments rotoriques 110, 70 et 80 et la paroi 60 de l'enceinte 6. le liquide se déplace rapidement dans l'espace libre 18. Une énergie importante doit donc être fournie par le moteur 11 pour entraîner en rotation le rotor 4. Egalement, la présence du liquide dans l'entrefer des paliers magnétiques 7, 8 perturbe le fonctionnement de ces derniers.

Conformément à la présente invention, afin de minimiser les effets d'inertie dus au liquide, des gorges, ou rainures, d'écoulement de liquide 45 et 46 sont prévues sur des parties de la surface externe 41 du rotor 4 non recouvertes par les éléments rotoriques 110, 70 et 80. Les gorges 45, 46 sont usinées le long de pourtours respectifs du rotor 4 appartenant à des plans transversaux P1 et P2 perpendiculaires à l'axe longitudinal de rotation 40 et situés de préférence entre le palier magnétique radial 7 et le moteur 11 et entre le moteur 11 et le palier magnétique radial 8 respectivement. Les gorges d'écoulement 45 et 46 fonctionnent comme des bassins de désengorgement et permettent, par une recirculation du fluide au sein de ces gorges, de réduire localement la vitesse du liquide à proximité des plans P1 et P2, et donc de réduire globalement l'inertie du liquide dans l'espace libre 18.

Les gorges 45 et 46 ont par exemple une largeur (parallèlement à l'axe 40) et une profondeur (parallèlement aux plans P1 et P2) d'environ 1 cm.

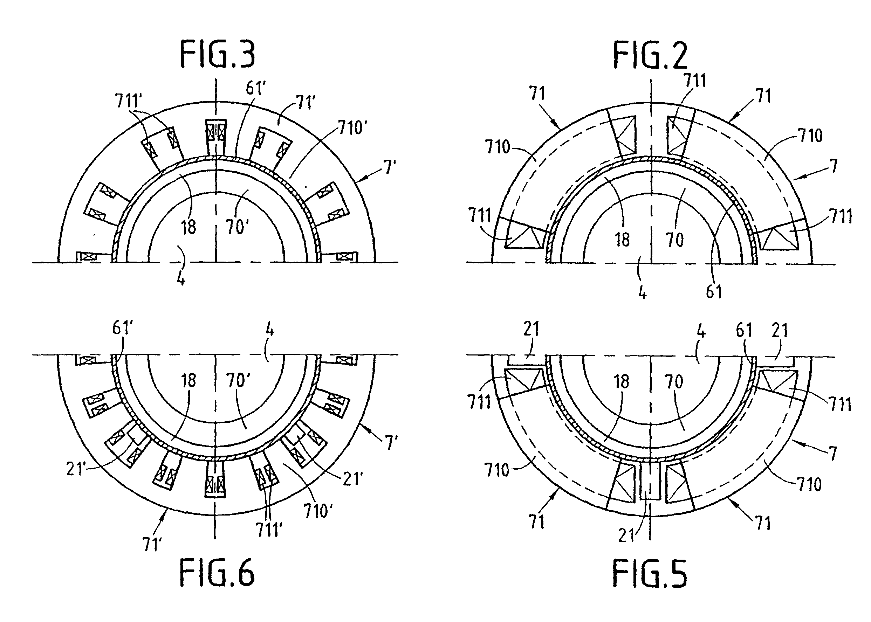

La figure 2 montre une autre vue du palier magnétique radial 7 de la figure 1, qui est identique au palier radial 8. Le palier 7 est de type cylindrique, c'est-à-dire présente un entrefer délimité par des surfaces cylindriques adaptées à la forme cylindrique du rotor 4 comme montré à la figure 1, et homopolaire. Le palier 7 comprend quatre électro-aimants 71 répartis régulièrement autour de l'armature annulaire 70 fixée sur le rotor 4, de manière à former quatre pôles. Les électro-aimants 71 comprennent chacun une culasse 710 en forme de portion d'anneau et conçue en un matériau magnétique qui peut être massif, et un bobinage 711 monté sur la culasse 710. Avec ce type de palier homopolaire à flux axial, il n'est pas indispensable que l'armature annulaire 70 soit feuilletée, bien que ce soit possible, comme représenté sur le dessin.

Les figures 1 et 2 montrent des paliers magnétiques radiaux du type homopolaire. Il est toutefois également possible de mettre en oeuvre des paliers magnétiques radiaux de type hétéropolaire, c'est-à-dire à flux radial.

Ainsi, la figure 3 montre de manière schématique une telle variante de réalisation du palier magnétique radial 7, ou 8, de la figure 1. Selon cette variante, le palier radial, désigné par 7', est de type cylindrique hétéropolaire et comprend une structure statorique en matériau magnétique feuilleté 71' et une armature annulaire 70' fixée sur le rotor 4. La structure statorique 71' comporte des dents 710', régulièrement réparties autour de l'armature annulaire 70' et orientées vers l'axe 40 du rotor 4. Sur chaque dent 710' est monté un bobinage 711'. L'armature annulaire 70' est feuilletée et constituée de tôles empilées, protégées du fluide par un revêtement qui peut être métallique, par exemple par nickelage, ou céramique.

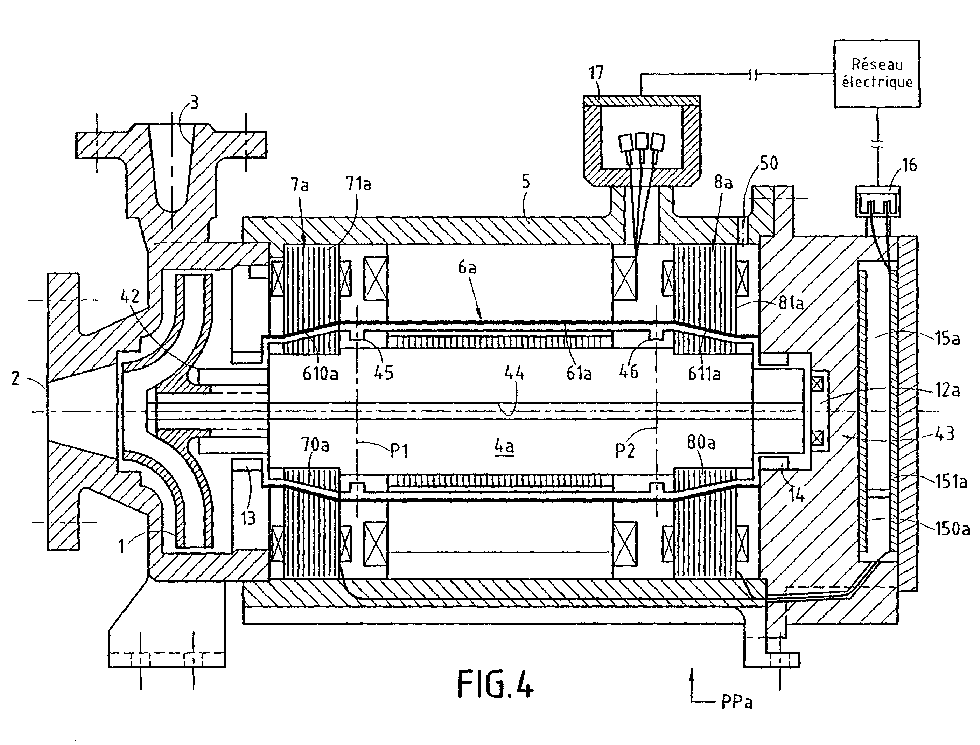

La figure 4 montre une pompe PPa selon un second mode de réalisation de l'invention. La pompe PPa diffère de la pompe PP représentée à la figure 1 essentiellement en ce que les paliers magnétiques radiaux 7, 8 de type cylindrique sont remplacés par des paliers magnétiques 7a et 8a de type conique présentant des entrefers délimités par des surfaces tronconiques. Ces paliers 7a, 8a peuvent exercer un centrage du rotor 4a à la fois dans la direction radiale et dans la direction axiale. Les paliers axiaux 9 et 10 de la figure 1 sont donc supprimés selon cette seconde réalisation.

Les paliers 7a, 8a, avec leurs circuits électroniques associés dans la carte de commande 151a à l'intérieur du compartiment 15a, sont capables de détecter la position radiale du rotor 4a et d'asservir cette position sur une position radiale d'équilibre stable. Pour positionner le rotor 4a axialement, les paliers coniques 7a, 8a sont asservis en fonction d'informations fournies par le détecteur de position axiale 12a à la carte électronique de commande 151a.

L'enceinte 6a, plus particulièrement la chemise 61a, comprend des portions tronconiques 610a, 611a dans les parties correspondant aux paliers coniques 7a, 8a respectivement, pour s'adapter aux formes tronconiques de ces derniers.

Les paliers magnétiques radiaux 7a, 8a de la figure 4 ont été représentés comme étant des paliers de type hétéropolaire, avec une armature annulaire 70a, 80a feuilletée et pouvant être réalisée comme l'armature annulaire 70' de la figure 3, et des circuits statoriques 71a, 8 la pouvant être réalisés comme le circuit statorique 71' de la figure 3.

Les paliers magnétiques radiaux coniques 7a, 8a de la figure 4 peuvent toutefois être également de type homopolaire à flux radial et réalisés selon une technologie analogue à celle décrite pour les paliers magnétiques radiaux cylindriques hétéropolaires 7, 8 décrits en référence aux figures 1 et 2. Dans ce cas, l'armature annulaire des paliers est en un matériau magnétique qui peut ne pas être feuilleté et les circuits statoriques des paliers coniques radiaux comprennent un ensemble d'électro-aimants à flux axial répartis autour de la chemise 61a, (d'une façon analogue à la figure 2) et non un empilement de tôles statoriques dentées équipées de bobinage pour produire un flux radial (comme représenté sur la figure 3).

Diverses modifications et adjonctions peuvent être apportées aux modes de réalisation qui viennent d'être décrits. Ainsi, par exemple, les paliers magnétiques radiaux peuvent ne pas être à autodétection, mais peuvent comprendre des détecteurs de position 21, 21' qui fonctionnent à travers la paroi métallique 6 ou 6a et sont intercalés entre les électro-aimants 71, 71' du stator d'un palier magnétique radial (figures 5 et 6) pour fournir des informations de position aux circuits électroniques de commande 151, 151a.

**Revendications**

1. Pompe rotative (PP) pour aspirer un liquide, comprenant une roue de pompe (1) solidaire d'un rotor (4) immergé dans une partie dudit liquide aspiré par la pompe, un moteur (11) comprenant un élément statorique (111) monté dans un bâti (5) et un élément rotorique (110) monté sur le rotor (4) pour entraîner en rotation le rotor (4) autour d'un axe (40), des moyens de support et de guidage (7-10, 12) du rotor (4), et un moyen de protection (61) pour protéger l'élément statorique (111) du moteur (11) contre ledit liquide, le rotor (4) comprenant au moins une gorge (45, 46) ménagée sur une surface externe recouverte par ladite partie de liquide, **caractérisée en ce que** les moyens de support et de guidage du rotor comprennent des premier et deuxième paliers magnétiques actifs radiaux (7, 8 ; 7a, 8a) disposés de part et d'autre du moteur (11), **en ce que** des gorges (45, 46) de recirculation de liquide sont ménagées sur la surface externe du rotor (4) dans des zones situées entre le moteur (11) et chacun des premier et deuxième paliers magnétiques radiaux (7, 8 ; 7a, 8a) et **en ce que** chaque gorge (45, 46) de recirculation de liquide est ménagée suivant un pourtour du rotor (4) situé dans un plan (P1, P2) sensiblement perpendiculaire à l'axe de rotation (40), pour en particulier réduire les effets d'inertie dus à ladite partie de liquide lors de déplacements radiaux du rotor (4).

2. Pompe selon la revendication 1, **caractérisée en ce que** lesdits moyens de support et de guidage comprennent au moins un palier magnétique radial actif (7, 8) de type cylindrique pour asservir la position radiale du rotor (4) sur une position radiale d'équilibre, et des paliers magnétiques actifs axiaux (9, 10) pour asservir la position axiale du rotor (4) sur une position axiale d'équilibre.

3. Pompe selon la revendication 2, **caractérisée en ce que** ledit palier magnétique actif radial (7, 8) est un palier apte à détecter lui-même la position radiale du rotor (4).

4. Pompe selon la revendication 1, **caractérisée en ce que** lesdits moyens de support et de guidage comprennent des paliers magnétiques actifs (7a, 8a) de type conique pour asservir les positions radiale et axiale du rotor (4) sur des positions d'équilibre respectives.

5. Pompe selon la revendication 4, **caractérisée en ce que** lesdits paliers magnétiques actifs de type conique (7a, 8a) sont des paliers aptes à détecter la position radiale du rotor (4).

6. Pompe selon l'une quelconque des revendications 1 à 5, **caractérisée en ce que** ledit moyen de protection est une chemise (61) empêchant ladite partie de liquide recouvrant le rotor (4) de pénétrer dans une cavité (19) du bâti (5) dans laquelle est monté l'élément statorique (111) du moteur (11).

7. Pompe selon l'une quelconque des revendications 1 à 6, **caractérisée en ce qu'**un alésage (44) est pratiqué dans le rotor (4) le long de l'axe de rotation (40) pour évacuer ladite partie de liquide recouvrant le rotor vers la roue de pompe (1) depuis une extrémité (42) du rotor opposée à la roue de pompe (1).

8. Pompe selon l'une quelconque des revendications 1 à 7, **caractérisée en ce qu'**elle comprend un compartiment (15) intégré au bâti (5) et de préférence antidéflagrant et étanche pour loger des circuits électroniques (150, 151) d'alimentation et de commande desdits moyens de guidage (7-10).

9. Pompe selon la revendication 8, **caractérisée en ce qu'**elle comprend une boîte de jonction (16) fixée au bâti (5), de préférence antidéflagrante, permettant de relier électriquement lesdits circuits électroniques (150, 151) au réseau électrique.

10. Pompe selon l'une quelconque des revendications 1 à 9, **caractérisée en ce qu'**elle comprend une boîte de jonction (17) fixée au bâti (5), de préférence antidéfiagrante, permettant de relier électriquement le moteur (11) au réseau électrique.

**Claims**

1. A rotary pump (PP) for taking in a liquid, the pump comprising a pump wheel (1) secured to a rotor (4) immersed in a portion of said liquid taken in by the pump, a motor (11) comprising a stator element (111) mounted in a case (5), and a rotor element (110) mounted on the rotor (4) to rotate the rotor (4) about an axis (40), support and guide means (7-10, 12) for the rotor (4), and protective means (61) for protecting the stator element (111) of the motor (11) from said liquid, the rotor (4) having at least one groove (45, 46) formed in an outer surface covered by said portion of the liquid, the pump being **characterised in that** the support and guide means of the rotor comprise first and second radial active magnetic bearings (7, 8; 7a, 8a) disposed at opposite ends of the motor (11), **in that** liquid recirculation grooves (45, 46) are formed in the outer surface of the rotor (4) in zones situated between the motor (11) and each of the first and second radial magnetic bearings (7, 8; 7a, 8a), and **in that** each liquid recirculation groove (45, 46) is formed around an outline of the rotor (4) situated in a plane (P1, P2) that is substantially perpendicular to the axis of rotation (40), specifically to reduce inertial effects during radial displacements of the rotor (4) and due to said portion of the liquid.

2. A pump according to claim 1, **characterised in that** said support and guide means comprise at least one active radial magnetic bearing (7, 8) of the cylindrical type for servo-controlling the radial position of the rotor (4) on a radial equilibrium position, and axial active magnetic bearings (9, 10) for servo-controlling the axial position of the rotor (4) on an axial equilibrium position.

3. A pump according to claim 2, **characterised in that** said radial active magnetic bearing (7, 8) is a bearing which is itself suitable for detecting the radial position of the rotor (4).

4. A pump according to claim 1, **characterised in that** said support and guide means comprise conical type active magnetic bearings (7a, 8a) for servo-controlling both the radial and the axial positions of the rotor (4) on respective equilibrium positions.

5. A pump according to claim 4, **characterised in that** said conical type active magnetic bearings (7a, 8a) are bearings that are suitable for detecting the radial position of the rotor (4).

6. A pump according to any one of claims 1 to 5, **characterised in that** said protective means is constituted by a jacket (61) preventing said portion of the liquid that covers the rotor (4) from penetrating into a cavity (19) in the case (5) within which the stator element (111) of the motor (11) is mounted.

7. A pump according to any one of claims 1 to 6, **characterised in that** a bore (44) is formed in the rotor (4) along the axis of rotation (40) to remove said portion of the liquid covering the rotor towards the pump wheel (1) from an end (42) of the rotor that is remote from the pump wheel (1).

8. A pump according to any one of claims 1 to 7, **characterised in that** it has a compartment (15) integrated in the case (5) and preferably explosion-proof and leakproof for housing electronic circuits (150, 151) for powering and controlling said guide means (7-10).

9. A pump according to claim 8, **characterised in that** it has a junction box (16) fixed to the case (5), preferably an explosion-proof junction box, enabling said electronic circuits (150, 151) to be electrically connected to electricity mains.

10. A pump according to any one of claims 1 to 9, **characterised in that** it has a junction box (17) fixed to the case (5), preferably an explosion-proof box, enabling the motor (11) to be connected to electricity mains.

**Patentansprüche**

1. Rotationspumpe (PP) zum Ansaugen einer Flüssigkeit, umfassend ein Pumpenrad (1), welches eine Bewegungseinheit mit einem Rotor (4) bildet, der in einen Teil der von der Pumpe angesaugten Flüssigkeit eingetaucht ist, einen Motor (11) mit einem in einem Gehäuse (5) gelagerten Statorelement (111) und einem an dem Rotor (4) gelagerten Rotorelement (110), um den Rotor (4) um eine Achse (40) zu drehen, Mittel zum Lagern und Führen (7-10, 12) des Rotors (4), und eine Schutzeinrichtung (61) zum Schützen des Statorelements (111) des Motors (11) vor der Flüssigkeit, wobei der Rotor mindestens eine Nut (45, 46) aufweist, die in einer Außenfläche ausgebildet ist, die von dem erwähnten Teil der Flüssigkeit bedeckt wird, **dadurch gekennzeichnet, dass** die Mittel zum Lagern und Führen ein erstes und ein zweites aktives Radial-Magnetlager (7, 8; 7a, 8a) aufweisen, die an einander abgewandten Seiten des Motors (11) angeordnet sind, dass in der Außenfläche des Rotors (4) in den Bereichen, die zwischen dem Motor (11) und jedem von dem ersten und dem zweiten Radial-Magnetlager (7, 8; 7a, 8a) liegen, Flüssigkeitsumwälznuten (45, 46) ausgebildet sind, und dass jede Flüssigkeitsumwälznut (45, 46) entlang einem Umfang des Rotors (4) ausgebildet ist, der sich in einer Ebene (P1, P2) etwa rechtwinklig zur Drehachse (40) befindet, um insbesondere die Trägheitseffekte zu verringern, die zurückzuführen sind auf den erwähnten Teil der Flüssigkeit bei radialen Verlagerungen des Rotors (4).

2. Pumpe nach Anspruch 1, **dadurch gekennzeichnet, dass** die Mittel zum Lagern und Führen mindestens ein aktives Radial-Magnetlager (7, 8) vom zylindrischen Typ aufweisen, um die radiale Lage des Rotors (4) auf eine radiale Gleichgewichtslage einzuregeln, und aktive Axialmagnetlager (9, 10) aufweisen, um die axiale Lage des Rotors (4) auf eine axiale Gleichgewichtslage einzuregeln.

3. Pumpe nach Anspruch 2, **dadurch gekennzeichnet, dass** das aktive Radial-Magnetlager (7, 8) ein die radiale Lage des Rotors (4) selbst detektierendes Lager ist.

4. Pumpe nach Anspruch 1, **dadurch gekennzeichnet, dass** die Mittel zum Lagern und Führen aktive Magnetlager (7a, 8a) vom Kegeltyp aufweisen, um die radialen und axialen Lagen des Rotors (4) auf die jeweiligen Gleichgewichtslagen einzuregeln.

5. Pumpe nach Anspruch 4, **dadurch gekennzeichnet, dass** die aktiven Magnetlager vom Kegeltyp (7a, 8a) Lager sind, die dazu ausgebildet sind, die radiale Lage des Rotors (4) zu detektieren.

**6.** Pumpe nach einem der Ansprüche 1 bis 5, **dadurch gekennzeichnet, dass** die Schutzeinrichtung ein Mantel (61) ist, der verhindert, dass der erwähnte Teil der Flüssigkeit, welcher den Rotor (4) bedeckt, in einen Hohlraum (19) des Gehäuses (5) eindringt, in welchem das Statorelement (111) des Motors (11) angeordnet ist.

**7.** Pumpe nach einem der Ansprüche 1 bis 6, **dadurch gekennzeichnet, dass** in dem Rotor (4) entlang der Drehachse (40) eine Bohrung (44) ausgebildet ist, um den erwähnten Teil der Flüssigkeit, der den Rotor bedeckt, von einem dem Pumpenrad (1) abgewandten Ende (42) des Rotors weg in Richtung des Pumpenrads (1) zu entfernen.

**8.** Pumpe nach einem der Ansprüche 1 bis 7, **dadurch gekennzeichnet, dass** sie eine einstückig mit dem Gehäuse (5) ausgebildete und vorzugsweise explosionsgeschützte und dichte Kammer (15) aufweist zur Aufnahme elektronischer Schaltungen (150, 151) zur Stromversorgung und Steuerung der Führungsmittel (7-10).

**9.** Pumpe nach Anspruch 8, **dadurch gekennzeichnet, dass** sie einen an dem Gehäuse (5) befestigten und vorzugsweise explosionsgeschützten Anschlusskasten (19) aufweist, der einen elektrischen Anschluss der elektronischen Schaltungen (150, 151) an eine elektrische Energiequelle ermöglicht.

**10.** Pumpe nach einem der Ansprüche 1 bis 9, **dadurch gekennzeichnet, dass** sie einen an dem Gehäuse (5) befestigten und vorzugsweise explosionsgeschützten Anschlusskasten (17) aufweist, der ein elektrisches Anschließen des Motors (11) an eine elektrische Energiequelle ermöglicht.

Réseau électrique

FIG.1

FIG.2

FIG.3

FIG.5

FIG.6

FIG.4

Réseau électrique